# FASCICULE DE BREVET EUROPEEN

(11) **EP 4 174 815 B1**
(45) Date de publication et mention de la délivrance du brevet: **18.06.2025**
(21) Numéro de dépôt: 22204313.5
(22) Date de dépôt: 28.10.2022
(51) Int. Cl.: G08C 17/02

(54) **DISPOSITIFS DE COMMANDE SANS FIL**
DRAHTLOSE STEUERUNGSVORRICHTUNGEN
WIRELESS CONTROL DEVICES

(30) Priorité: 29.10.2021 FR 2111567
(43) Date de publication de la demande: 03.05.2023
(73) Titulaire: Schneider Electric Industries SAS, 92500 Rueil-Malmaison (FR)
(72) Inventeur: PETTINOTTO, Gilles, 38410 Vaulnaveys Le Haut (FR)
(74) Mandataire: Lavoix

(56) Documents cités:
- WO-A1-2012/025335
- WO-A2-01/45139

## Description

La présente invention concerne un dispositif de commande sans fil.

L'invention est avantageusement applicable aux interrupteurs sans fil, ou plus généralement à tout capteur ou dispositif de commande actionnable mécaniquement, tel qu'un détecteur de fermeture associé à une porte ou à une fenêtre.

Il existe des dispositifs de commande sans fil, par exemple des interrupteurs muraux, qui sont utilisés pour commander des appareils domestiques sans avoir besoin de tirer une liaison filaire entre le dispositif de commande et l'appareil domestique.

De tels dispositifs de commande comportent une interface radio capable d'envoyer un message radio à destination de l'appareil à chaque fois que le dispositif de commande est actionné mécaniquement, que ce soit par un utilisateur ou par un objet.

Souvent, la puissance électrique nécessaire à l'envoi du message radio est obtenue par des moyens de récupération d'énergie qui sont activés par l'action d'un utilisateur sur un élément mobile d'actionnement du dispositif de commande, tel qu'un bouton. Ainsi, le dispositif de commande est autonome en énergie. La demande de brevet FR 3079654 A1 décrit un exemple d'un tel dispositif de commande sans fil.

Ces dispositifs de commande connus ont pour inconvénient qu'il est impossible de déterminer la position de l'élément de commande. On peut seulement détecter que l'élément mobile du dispositif de commande a été actionné, sans savoir vers quelle position cet élément mobile a été déplacé. Or, dans de nombreux cas, il peut être souhaitable de piloter l'appareil de façon différente en fonction de la position de l'élément mobile, selon que le dispositif de commande est actionné depuis une première position vers une deuxième position, ou inversement.

WO-2012/025335-A1 décrit, par exemple, un bouton poussoir avec détection de position.

C'est à ces inconvénients qu'entend plus particulièrement remédier l'invention en proposant un dispositif de commande sans fil capable de déterminer la position d'un organe de commande du dispositif de commande sans fil et pour envoyer un signal de commande à un appareil distant, le signal de commande pouvant être fonction de la position du déterminée.

À cet effet, un aspect de l'invention concerne un dispositif de commande sans fil selon la revendication 1.

Grâce à l'invention, il est possible de détecter la position de l'élément mobile d'actionnement lors de chaque actionnement de l'élément mobile d'actionnement. L'information correspondante peut ensuite être incorporée dans le signal de commande qui est envoyé à l'appareil distant. Le tout est réalisé par un dispositif de commande autonome en énergie, dans lequel le traitement et l'envoi du signal de commande sont réalisés grâce à l'énergie collectée lors de l'actionnement de l'élément mobile d'actionnement.

Selon des aspects avantageux mais non obligatoires, un tel dispositif de commande sans fil peut incorporer une ou plusieurs des caractéristiques suivantes, prises isolément ou suivant toute combinaison techniquement admissible :
- le signe de la tension électrique délivrée par le dispositif de récupération d'énergie est positif lorsque le mécanisme de transmission se déplace dans un premier sens et négatif lorsque le mécanisme de transmission se déplace dans un deuxième sens, le deuxième sens étant opposé au premier sens ;
- le circuit de détection d'impulsion comporte un condensateur, qui agit comme la mémoire du circuit d'impulsion ;
- le circuit électronique de commande est configuré pour vider automatiquement la mémoire du circuit de détection d'impulsion une fois que le signe de la tension délivrée par le dispositif de récupération d'énergie a été identifié par le circuit électronique de commande ;
- le circuit de détection d'impulsion comporte un condensateur et une résistance ;
- le dispositif de commande comporte :
   - un élément mobile d'actionnement additionnel,
   - un dispositif de récupération d'énergie additionnel couplé mécaniquement à l'élément mobile d'actionnement additionnel et configuré pour alimenter électriquement le circuit électronique de commande,
   - au moins un circuit de détection d'impulsion additionnel connecté en sortie du dispositif de récupération d'énergie additionnel, le circuit de détection d'impulsion additionnel étant connecté au circuit électronique de commande et étant configuré pour identifier le signe de la tension électrique en sortie du circuit de détection d'impulsion additionnel et pour mémoriser une information représentative du signe de ladite tension électrique de sortie ;
- l'émetteur est un émetteur radio ;
- le dispositif de commande sans fil est un interrupteur de type bouton poussoir ;
- le dispositif de commande sans fil est un interrupteur à bascule ;
- le dispositif de commande est autonome en énergie.

L'invention sera mieux comprise et d'autres avantages de celle-ci apparaîtront plus clairement à la lumière de la description qui va suivre d'un mode de réalisation d'un dispositif de commande sans fil donnée uniquement à titre d'exemple et faite en référence aux dessins annexés, dans lesquels :
[Fig 1] la figure 1 représente schématiquement une vue extérieure d'un dispositif de commande sans fil, tel qu'un interrupteur mural, conforme à des modes de réalisation de l'invention ;
[Fig 2] la figure 2 est un schéma synoptique d'un dispositif de commande sans fil conforme à des modes de réalisation de l'invention ;
[Fig 3] la figure 3 représente schématiquement un mode de réalisation d'un circuit de détection d'impulsion appartenant au dispositif de commande sans fil de la figure 2 ;
[Fig 4] la figure 4 représente schématiquement un exemple d'une impulsion de tension générée par un dispositif de récupération d'énergie du dispositif de commande sans fil ;
[Fig 5] la figure 5 représente schématiquement un mode de réalisation d'un dispositif de commande sans fil comportant deux boutons associés à un même circuit électronique de commande.

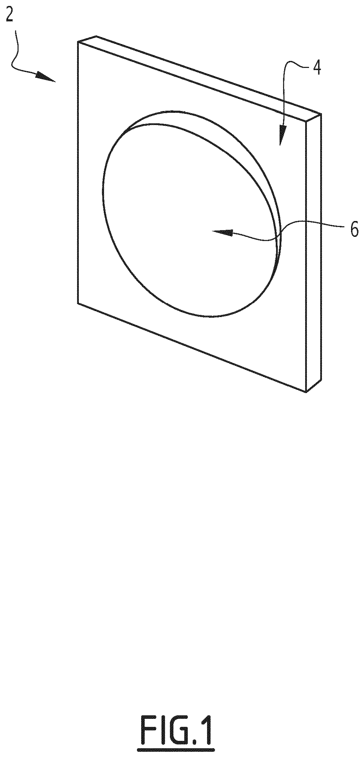

La figure 1 représente schématiquement un dispositif de commande sans fil 2.

Par exemple, le dispositif de commande sans fil est un interrupteur, de préférence un interrupteur mural. Mais l'invention n'est pas limitée à cet exemple et, dans de nombreuses variantes, le dispositif de commande 2 pourrait prendre d'autres formes. Par exemple, le dispositif 2 pourrait être un capteur électromécanique capable de détecter l'ouverture ou la fermeture d'un élément de fermeture tel qu'une porte ou une fenêtre ou une trappe.

Le dispositif 2 comporte un boîtier 4 et un élément mobile d'actionnement 6.

Par exemple, le boîtier 4 forme une coque ou une armature, qui est apte à être fixée sur un mur ou sur un support approprié.

Par exemple, l'élément mobile d'actionnement 6 est un bouton.

Dans la suite de la description, l'élément mobile d'actionnement 6 est par commodité désigné par le terme « bouton », mais cela n'empêche pas l'élément mobile d'actionnement 6 de prendre d'autres formes que celle d'un bouton conformé pour être actionnable par un utilisateur. Dans des variantes, il pourrait s'agir d'un élément mécaniquement actionnable par un objet tel qu'une porte. Toute référence au bouton 6 doit donc de préférence être comprise comme une référence à un élément mobile d'actionnement 6 plus générique.

Le boîtier 4, de même que le bouton 6, peuvent être réalisés en matière plastique.

Le bouton 6 est opérable depuis l'extérieur du boîtier 4. Le bouton 6 forme une partie mobile par rapport au boîtier 4. Le bouton 6 est déplaçable entre deux positions stables.

Par exemple, une première position stable correspond à un état allumé et une deuxième position stable correspond à un état éteint.

Dans certains modes de réalisation, le dispositif de commande 2 est un interrupteur à bascule, dans lequel le bouton 6 est déplaçable entre ses deux positions par pivotement autour d'un axe de rotation.

Dans d'autres modes de réalisation, le dispositif de commande 2 est un interrupteur de type bouton poussoir, dans lequel le bouton 6 peut être déplacé entre ses deux positions par translation le long d'un axe de déplacement.

Dans d'autres modes de réalisation, selon la nature de l'appareil distant commandé par l'interrupteur, d'autres positions du bouton 6 pourraient être définies, notamment une ou plusieurs positions intermédiaires comprises entre les deux positions stables définies ci-dessus. Le dispositif de commande 2 pourrait par exemple être un variateur, dans lequel le bouton 6 serait déplaçable continument entre des positions extrêmes. La forme du bouton 6 pourrait aussi être différente, notamment selon la nature du dispositif de commande 2.

De façon générale, le dispositif de commande 2 est configuré pour piloter un appareil distant, en envoyant un signal de commande sans fil, tel qu'un message radio ou un message lumineux. Ce signal de commande est envoyé en réaction à l'actionnement du bouton 6 par un utilisateur.

Selon de nombreux modes de réalisation, l'appareil distant est un équipement domotique, pouvant être installé dans un système domestique. L'appareil distant peut, par exemple, être un volet électrique, ou un store électrique, ou un luminaire, ou un système de ventilation ou de chauffage, ou tout appareil analogue, ou un contrôleur électronique commandant un ou plusieurs des éléments précédents, ces exemples n'étant pas limitatifs et de nombreux autres types d'appareils pouvant être envisagés.

On comprend que le dispositif de commande 2 n'est pas raccordé à l'appareil distant par un câble ou un fil.

En outre, le dispositif de commande 2 est autonome en énergie, c'est-à-dire qu'il n'est pas alimenté en électricité par une source électrique telle qu'un réseau électrique.

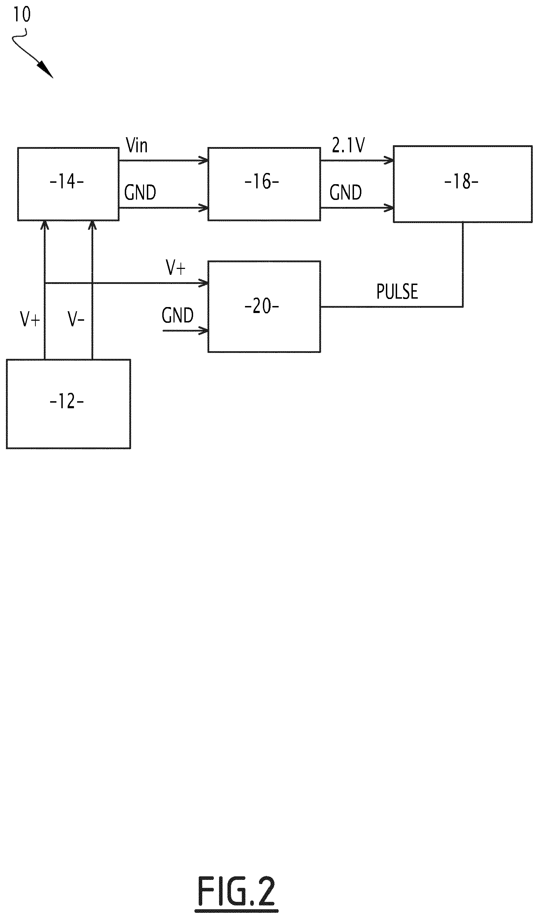

À cet effet, comme illustré sur le schéma de la figure 2, le dispositif de commande 2 comporte également :
- un circuit électronique de commande 18 comportant un émetteur sans fil capable d'émettre un signal de commande à destination d'un appareil électrique,
- un dispositif de récupération d'énergie 12, configuré pour alimenter électriquement le circuit électronique de commande 18,
- un dispositif d'alimentation électrique, portant ici les références 14 et 16, et
- un circuit de détection d'impulsion 20.

L'ensemble 10 de ces éléments forme par exemple une chaîne de traitement qui est couplée au bouton 6. Ces éléments sont ici logés à l'intérieur du boîtier 4.

Le dispositif de récupération d'énergie 12 est couplé mécaniquement au bouton 6 au moyen d'un mécanisme de transmission (non illustré).

Le dispositif de récupération d'énergie 12 est configuré pour convertir de l'énergie mécanique en énergie électrique lorsque le bouton 6 est actionné, en délivrant une tension électrique de sortie entre des bornes de sortie du dispositif de récupération d'énergie (notées V+ et V- sur la figure 2).

Par exemple, le dispositif de récupération d'énergie 12 comporte un ou plusieurs éléments piézoélectriques et/ou électromagnétiques associés au mécanisme de transmission et étant capables de générer une tension électrique à partir du déplacement du mécanisme de transmission.

Le sens de mouvement du mécanisme de transmission détermine le signe de la tension électrique de sortie délivrée par le dispositif de récupération d'énergie 12.

On comprend que le sens de mouvement du mécanisme de transmission dépend du sens de déplacement du bouton 6 d'une position à l'autre.

Par exemple, lorsque le bouton 6 est déplacé d'une première position à une deuxième position, le mécanisme de transmission se déplace dans un premier sens. Lorsque le bouton 6 est déplacé de la deuxième position à la première position, le mécanisme de transmission se déplace dans un deuxième sens généralement opposé au premier sens.

Selon des modes de réalisation, le signe de la tension électrique délivrée par le dispositif de récupération d'énergie 12 est positif lorsque le mécanisme de transmission se déplace dans un premier sens et négatif lorsque le mécanisme de transmission se déplace dans un deuxième sens, le deuxième sens étant opposé au premier sens.

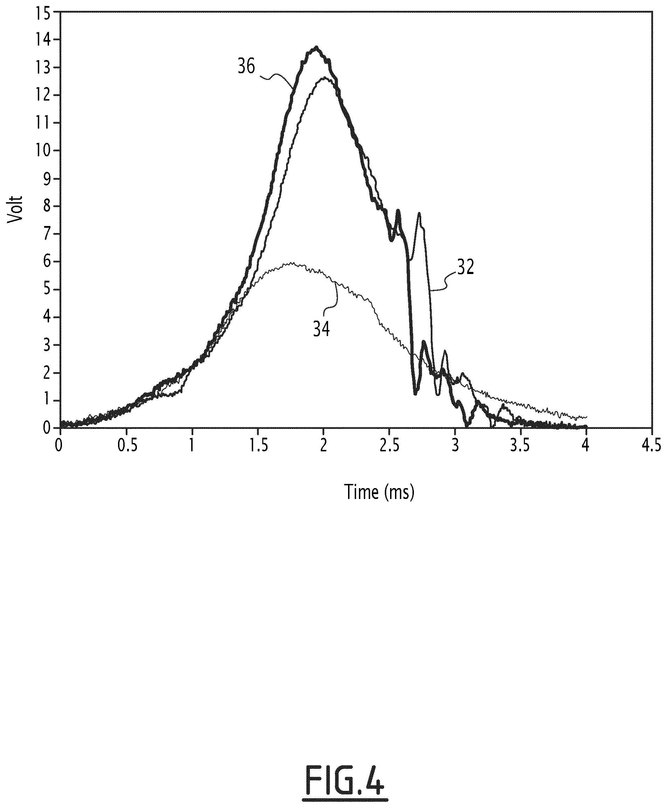

La tension délivrée par le dispositif de récupération d'énergie 12 peut se présenter sous la forme d'une ou de plusieurs impulsions de tension, dont un exemple sera décrit ci-après en référence à la figure 4.

Dans certains modes de réalisation, le bouton 6 et le dispositif de récupération d'énergie 12 peuvent être intégrés au sein d'un même module mécanique. En variante, il peut s'agir de composants distincts qui sont assemblés entre eux.

Le dispositif d'alimentation électrique 14, 16, est configuré pour accumuler l'énergie électrique fournie par le dispositif de récupération d'énergie.

Le dispositif d'alimentation électrique 14, 16 est également configuré pour alimenter électriquement l'émetteur sans fil (et plus généralement pour alimenter le circuit électronique de commande 18), temporairement et avec l'énergie électrique accumulée, pour que l'émetteur sans fil puisse envoyer le signal de commande.

Dans l'exemple illustré, le dispositif d'alimentation électrique comporte un redresseur 14 et un convertisseur de puissance continu-continu 16.

Le redresseur 14 est ici connecté, par son entrée, aux bornes de sorties V+, V- du dispositif de récupération d'énergie 12.

Le redresseur 14 est ici connecté par sa sortie au convertisseur de puissance 16, pour délivrer une tension électrique Vin au convertisseur de puissance 16, cette tension étant ici mesurée par rapport à la masse électrique GND du système 10.

Par exemple, le redresseur 14 comporte un redresseur à simple ou à multiple alternance, tel qu'un pont de diodes.

Selon des modes de réalisation, le convertisseur de puissance 16 comporte un convertisseur de tension.

D'autres modes de réalisation sont possibles en variante.

Le dispositif d'alimentation électrique 14, 16 délivre, en sortie, une tension continue redressée qui sert à alimenter temporairement le circuit électronique de commande 18.

Dans l'exemple illustré, la tension de sortie est égale à 2,1 Volts.

En pratique, le circuit électronique de commande 18 n'est alimenté électriquement par le dispositif d'alimentation électrique 14, 16 que pendant une courte durée, suite à l'actionnement du bouton 6, puisqu'il n'y a aucune autre source d'alimentation électrique dans le dispositif de commande 2.

Par exemple, la puissance électrique fournie en sortie du dispositif de récupération d'énergie 12 n'est délivrée que pendant une durée très courte, par exemple une durée inférieure à 10 millisecondes ou inférieure à 5 millisecondes.

Le dispositif d'alimentation électrique 14, 16 comporte avantageusement des moyens pour stocker temporairement l'électricité générée par le dispositif de récupération d'énergie 12, tel qu'un condensateur. L'énergie électrique délivrée par le dispositif de récupération d'énergie 12 est ainsi temporairement stockée puis restituée sous forme de tension électrique permettant d'alimenter le circuit électronique de commande 18 pendant une durée plus longue, par exemple pendant une durée inférieure à une seconde ou inférieure à 500 millisecondes.

Dans de nombreux modes de réalisation, le circuit électronique de commande 18 comporte un processeur, tel qu'un microcontrôleur programmable ou un microprocesseur.

Par exemple, le processeur est couplé à une mémoire informatique, telle qu'une mémoire morte (ROM) ou une mémoire Flash ou un support d'enregistrement de données lisible par ordinateur, qui comporte des instructions exécutables et/ou un code logiciel prévu pour, notamment, mettre en œuvre un procédé de construction et d'envoi d'un message de commande lorsque ces instructions sont exécutées par le processeur.

L'emploi du terme « processeur » ne fait pas obstacle à ce que, en variante, au moins une partie des fonctions du circuit électronique de commande 18 soient réalisées par d'autres composants électroniques, tels qu'un processeur de traitement du signal (DSP), ou un composant logique reprogrammable (FPGA), ou un circuit intégré spécialisé (ASIC), ou tout élément équivalent, ou toute combinaison de ces éléments.

De préférence, l'émetteur du circuit électronique de commande 18 est un émetteur radio capable d'envoyer un message radiofréquence.

Par exemple, on utilise une liaison radio de courte portée, telle qu'une liaison Bluetooth (marque déposée) ou Bluetooth Low Energy (marque déposée), ou Zigbee (marque déposée), ou équivalent. En variante, on peut utiliser une liaison longue portée à bas débit, telle que LORA ou Sigfox (marques déposées) ou équivalent.

En variante, d'autres moyens de communication sans fil pourraient être utilisés, par exemple en utilisant des signaux lumineux dans le spectre de la lumière visible ou de l'infrarouge.

De préférence, le processeur du circuit électronique de commande 18 est un processeur à basse consommation électrique.

Le circuit de détection d'impulsion 20 est configuré pour identifier le signe de la tension électrique de sortie et pour mémoriser une information représentative du signe de la tension électrique de sortie, l'émetteur sans fil du circuit électronique de commande 18 étant en outre configuré pour inclure, dans le signal de commande envoyé, l'information représentative du signe de la tension électrique de sortie.

De façon générale, le dispositif d'alimentation électrique 14, 16 et le circuit de détection d'impulsion 20 sont connectés en parallèle entre les bornes de sortie du dispositif de récupération d'énergie (en l'occurrence, du convertisseur 16) et une entrée de l'émetteur (ici du circuit électronique de commande 18).

Par exemple, une entrée du circuit de détection d'impulsion 20 est connectée à une sortie (V+) du dispositif de récupération d'énergie 12.

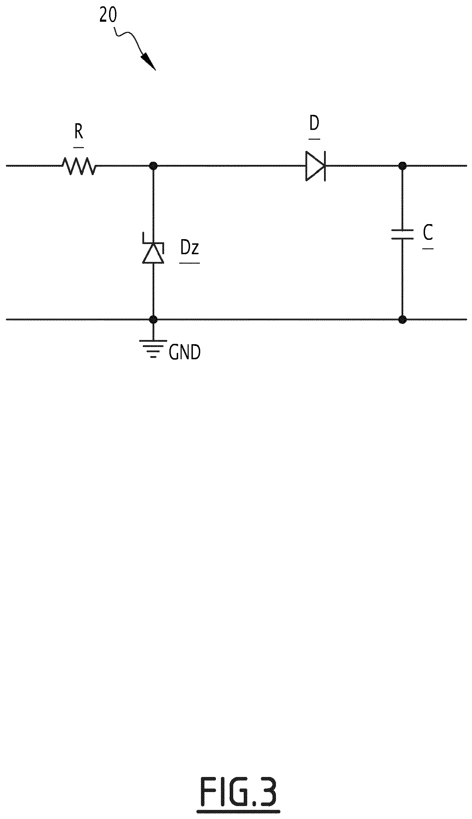

La figure 3 représente un exemple de réalisation d'un circuit de détection d'impulsion 20.

Le circuit de détection d'impulsion 20 comporte une résistance R, un condensateur C, une diode D et une diode Zéner Dz.

La résistance R et la diode D sont connectés en série l'une avec l'autre entre l'entrée et la sortie du circuit de détection d'impulsion 20.

La résistance R est ici connectée du côté de l'entrée du circuit de détection d'impulsion 20 tandis que la diode D est connectée du côté de la sortie du circuit de détection d'impulsion 20 avec sa cathode du côté de la sortie.

La diode Zéner Dz est connectée entre la résistance R et la masse électrique GND, par exemple avec l'anode de la diode Zéner Dz connectée à la masse électrique.

Le condensateur C est connecté entre la cathode de la diode D et la masse électrique GND.

Comme on l'aura compris à la lecture des explications précédentes, le condensateur C est configuré pour se charger lorsque le circuit de détection d'impulsion 20 reçoit une impulsion de tension en entrée, puis pour délivrer une tension lorsqu'il se décharge après le passage de l'impulsion.

Le condensateur C agit donc comme une mémoire qui mémorise une information sur le signe de l'impulsion de tension détectée (et donc sur le sens de déplacement du bouton 6). De préférence, la capacité du condensateur C est choisie pour minimiser les pertes d'énergie lors du chargement et du déchargement du condensateur C.

Dans cet exemple spécifique, le circuit de détection d'impulsion 20 est uniquement capable de détecter une impulsion de tension de signe positif. On ne peut donc détecter directement qu'une impulsion correspondant à un seul sens de déplacement.

Par exemple, pour détecter une tension de signe opposée, on peut utiliser un tel circuit de détection d'impulsion auquel on ajoute, en entrée, un dispositif permettant d'inverser le signe du courant.

Pour distinguer entre une tension d'un premier signe et d'une tension du signe opposé avec un même circuit de détection d'impulsion, on peut considérer que l'on est en présence d'une impulsion d'un deuxième signe (par exemple une impulsion du signe opposé au signe que l'on peut détecter avec ce circuit de détection) lorsque le circuit de détection ne détecte rien alors que l'on sait qu'une impulsion a bien été reçue (parce le circuit électronique de commande 18 a été redémarré et donc alimenté électriquement par une telle impulsion, puisqu'il ne peut pas être alimenté électriquement autrement que suite à la réception d'une telle impulsion de tension).

Par exemple, dans ce cas, l'information représentative d'une tension électrique de sortie de signe positif correspond à la présence d'une tension aux bornes du condensateur C lorsque ce dernier se décharge juste après l'impulsion de tension (représenté par la référence « PULSE » sur la figure 2). L'information représentative d'une tension électrique de sortie de signe négatif correspond à une absence de tension aux bornes du condensateur C, puisque ce dernier ne s'est pas chargé.

La valeur de la résistance R et la valeur de capacité du condensateur C sont choisies en faisant un compromis entre la durée pendant laquelle on mémorise le signe de l'impulsion, et la consommation en énergie, ici en partie due aux pertes par effet Joule dans la résistance R.

Il est important que ces pertes soient aussi faibles que possible, car le dispositif de récupération d'énergie 12 ne génère qu'une quantité relativement faible d'énergie (par exemple comprise entre 250 microJoules et 400 microJoules) et qu'il faut conserver suffisamment d'énergie pour rallumer le circuit électronique de commande 18 et envoyer le signal de commande depuis l'émetteur du circuit électronique de commande 18.

On cherchera donc à ajuster le produit R.C (produit de la résistance R par la capacité C) pour respecter au mieux ces contraintes, notamment en fonction des caractéristiques des composants et notamment des caractéristiques du processeur.

Avantageusement, on choisit une durée de mémorisation qui correspond au plus près à la durée de démarrage du processeur dans le circuit électronique de commande 18, par exemple une durée supérieure ou égale à la durée de démarrage mais inférieure ou égale à 110% de cette durée ou à 105% de cette durée.

Par exemple, plus la valeur de la résistance R est élevée, plus la valeur de la capacité C doit être élevée, en veillant cependant à ce que la valeur de la capacité C ne soit pas trop élevée, sans quoi le condensateur n'aura pas le temps de se charger suffisamment pendant la durée de l'impulsion (qui, comme on l'a expliqué plus haut, dure généralement au plus pendant une dizaine de microsecondes).

Avantageusement, le placement de la diode Zener Dz avant la diode D permet de limiter l'influence des caractéristiques de la diode Zéner sur la mémorisation du signal par le condensateur C.

De préférence, on choisit une diode D qui possède un courant de fuite le plus bas possible, afin d'éviter une décharge immédiate du condensateur C lorsque la valeur de l'impulsion de tension diminue et repasse sous la tension de seuil de la diode Zéner Dz.

Préférentiellement, le circuit électronique de commande 18 peut être configuré pour vider le condensateur C après avoir identifié le signe de l'impulsion, ceci afin de garantir que le condensateur C sera dans un état neutre lors de la réception d'une future impulsion.

En variante, le circuit de détection d'impulsion 20 pourrait être construit différemment. Notamment, on peut utiliser un circuit de détection qui est capable de détecter directement la tension quel que soit son signe positif ou négatif.

Le circuit électronique de commande 18 est configuré pour envoyer le signal de commande une fois que le signe de la tension délivrée par le dispositif de récupération d'énergie a été identifié par le circuit électronique de commande (grâce au circuit de détection d'impulsion 20).

Le signal de commande élaboré par le circuit électronique de commande 18 contient l'information représentative du signe de la tension électrique de sortie.

Par exemple, l'élaboration du signal de commande peut consister à choisir parmi des signaux préenregistrés, ou des messages préenregistrés, en fonction du résultat de l'identification du signe de la tension, ces signaux étant ensuite envoyés au moyen de l'émetteur.

Par exemple, les messages peuvent être des messages radiofréquence comprenant une trame contenant un en-tête et un corps, dans lequel on stocke une valeur numérique, ou un symbole ou toute autre donnée, représentative du signe identifié.

De façon générale, grâce à l'invention, il est possible notamment grâce à l'ensemble 10 de détecter la position du bouton 6 (ou, de façon équivalente, le sens de déplacement du bouton 6) lors de chaque actionnement du bouton 6. L'information correspondante peut ensuite être incorporée dans le signal de commande qui est envoyé à l'appareil distant. Le dispositif de commande 2 reste malgré tout autonome en énergie, le traitement et l'envoi du signal de commande étant réalisés grâce à l'énergie collectée lors de l'actionnement du bouton 6.

Cette solution est particulièrement avantageuse, car le circuit de détection d'impulsion 20 permet de déterminer et mémoriser le signe de la tension (qui indique le sens du mouvement du bouton 6) dès la réception de l'impulsion générée par le dispositif de récupération d'énergie 12.

Cette information est mémorisée pendant un certain temps, le temps que l'émetteur et le processeur du circuit électronique de commande 18 démarrent et soient pleinement opérationnels, étant entendu que le circuit électronique de commande 18 est arrêté lorsque le circuit électronique de commande 18 n'est pas alimenté, et que le redémarrage n'est pas instantané mais peut, au contraire, nécessiter une durée de quelques millisecondes au moins.

Cette solution est, par ailleurs, relativement compacte et donc facile à intégrer dans le boîtier 4.

La figure 4 représente un exemple d'impulsion de tension électrique générée par le dispositif de récupération d'énergie 12 lorsque le bouton 6 est actionné. L'impulsion de tension est ici de signe positif.

Sur cette figure, les tensions sont exprimées en volts (axe des ordonnées, noté « Volt » sur la figure) en fonction du temps écoulé, (axe des abscisses, noté « time » sur la figure et exprimé en millisecondes - ms -).

La courbe 32 représente la tension aux bornes du condensateur du circuit de détection d'impulsion 20 de la figure 3 lorsque le dispositif de récupération d'énergie 12 génère une impulsion en tension.

La courbe 34 représente la tension aux bornes de la résistance du circuit de détection d'impulsion 20 de la figure 3 lorsque le dispositif de récupération d'énergie 12 génère une impulsion en tension.

La courbe 36 représente la tension délivrée entre les bornes de sortie du circuit de détection d'impulsion 20 de la figure 3 lorsque le dispositif de récupération d'énergie 12 génère une impulsion en tension et lorsqu'aucune charge électrique n'est connectée entre ces bornes.

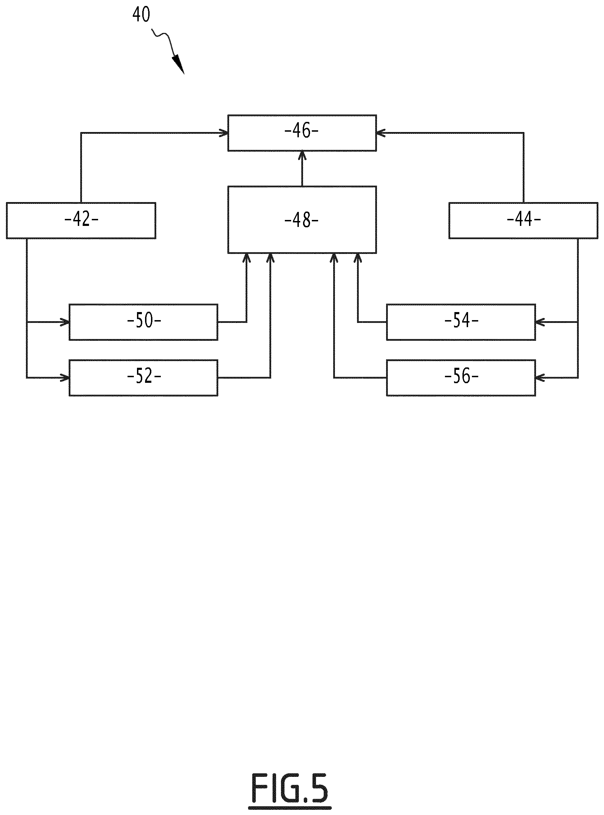

La figure 5 représente un mode de réalisation d'un dispositif de commande sans fil 40 comportant deux boutons actionnables indépendamment l'un de l'autre qui partagent un même circuit électronique de commande. Les deux boutons du dispositif de commande sans fil 40, bien que non représentés, sont analogues au bouton 6 décrit précédemment.

Les éléments constitutifs de ce dispositif de commande 40 sont analogues à ceux décrits en référence au dispositif de commande sans fil 2, tant dans leur structure que dans leur façon de fonctionner. Ces éléments ne sont donc pas décrits en détail, dans la mesure où la description ci-dessus peut leur être transposée.

Le dispositif de commande 40 comporte un premier bouton couplé à un premier dispositif de récupération d'énergie 42 et un deuxième bouton couplé à un deuxième dispositif de récupération d'énergie 44.

Le premier dispositif de récupération d'énergie 42 et le deuxième dispositif de récupération d'énergie 44 sont analogues au dispositif de récupération d'énergie 12.

Chaque bouton est couplé au dispositif de récupération d'énergie correspondant par un mécanisme de transmission, de façon analogue à celle décrite précédemment pour le dispositif de récupération d'énergie 12.

Le dispositif de commande 40 comporte aussi un dispositif d'alimentation électrique 46 et un circuit électronique de commande 48, respectivement analogues au dispositif d'alimentation électrique 14, 16 et au circuit électronique de commande 18.

Le premier dispositif de récupération d'énergie 42 et le deuxième dispositif de récupération d'énergie 44 sont configurés pour alimenter électriquement le circuit de électronique commande 48, par l'intermédiaire du dispositif d'alimentation électrique 46.

A cet effet, les dispositifs de récupération d'énergie 42 et 44 sont tous deux connectés au dispositif d'alimentation électrique 46.

Le dispositif de commande 40 comporte également un circuit de détection d'impulsion associé à chaque dispositif de récupération d'énergie 42 ou 44.

Dans l'exemple illustré, on utilise des circuits de détection d'impulsion analogues à ceux du mode de réalisation du circuit de détection 20 illustré sur la figure 3, ce dernier ne pouvant détecter qu'une impulsion d'un signe donné (signe positif dans cet exemple). On utilise alors deux circuits de détection d'impulsion similaires : un premier pour détecter une impulsion de signe positif et un deuxième pour détecter une impulsion de signe négatif, ce dernier pouvant être analogue au premier circuit de détection d'impulsion auquel on ajoute en entrée un élément qui inverse le signe de la tension mesurée.

Ainsi, le dispositif de commande 40 comporte un premier circuit de détection d'impulsion 50 et un deuxième circuit de détection d'impulsion 52, tous deux connectés en sortie du premier dispositif de récupération d'énergie 42 et leurs sorties respectives sont connectées à des entrées du circuit électronique de commande 48.

Le premier circuit de détection d'impulsion 50 et le deuxième circuit de détection d'impulsion 52 sont, par exemple, analogues au circuit de détection d'impulsion 20 précédemment décrit et jouent un rôle similaire à ce dernier.

Notamment, le premier circuit de détection d'impulsion 50 est configuré pour détecter une tension électrique en sortie du premier dispositif de récupération d'énergie 42 ayant un premier signe (et correspondant à un premier sens d'actionnement du premier bouton), tandis que le deuxième circuit de détection d'impulsion 52 est configuré pour détecter une tension électrique ayant un deuxième signe (et correspondant à un deuxième sens d'actionnement du premier bouton).

Le dispositif de commande 40 comporte également un troisième circuit de détection d'impulsion 54 et un quatrième circuit de détection d'impulsion 56, respectivement similaires au premier circuit de détection d'impulsion 50 et au deuxième circuit de détection d'impulsion 52.

Le troisième circuit de détection d'impulsion 54 et le quatrième circuit de détection d'impulsion 56 sont tous deux connectés en sortie du deuxième dispositif de récupération d'énergie 44 et leurs sorties respectives sont connectées à d'autres entrées du circuit électronique de commande 48.

Le troisième circuit de détection d'impulsion 54 est configuré pour détecter une tension électrique en sortie du deuxième dispositif de récupération d'énergie 44 ayant un premier signe (et correspondant à un premier sens d'actionnement du deuxième bouton), tandis que le quatrième circuit de détection d'impulsion 56 est configuré pour détecter une tension électrique ayant un deuxième signe (et correspondant à un deuxième sens d'actionnement du deuxième bouton).

Ainsi, le circuit électronique de commande 48 est configuré pour déterminer lequel des deux boutons a été actionné, et aussi pour déterminer dans quel sens ce bouton a été actionné.

Ce mode de réalisation permet d'optimiser la conception du dispositif de commande 40 et de réduire le coût de fabrication d'un dispositif de commande sans fil à double bouton, dans la mesure où un seul circuit électronique de commande est utilisé, au lieu d'utiliser deux circuits électroniques de commande indépendants dans un même boîtier.

De nombreux autres modes de réalisation sont possibles.

Les modes de réalisation et les variantes envisagés ci-dessus peuvent être combinés entre eux pour créer de nouveaux modes de réalisation.

## Revendications

1. Dispositif de commande sans fil (2 ; 40), comportant :
- un boîtier (4),
- un élément mobile d'actionnement (6) opérable depuis l'extérieur du boîtier,
- un circuit électronique de commande (18 ; 48) comportant un émetteur sans fil capable d'émettre un signal de commande à destination d'un appareil électrique,
- un dispositif de récupération d'énergie (12 ; 42, 44) configuré pour alimenter électriquement le circuit électronique de commande, le dispositif de récupération d'énergie étant couplé mécaniquement à l'élément mobile d'actionnement (6) au moyen d'un mécanisme de transmission et configuré pour convertir de l'énergie mécanique en énergie électrique lorsque l'élément mobile d'actionnement est actionné, en délivrant une tension électrique de sortie entre des bornes de sortie (V+, V-),
dans lequel le sens de mouvement du mécanisme de transmission détermine le signe de la tension électrique de sortie (V+, V-) délivrée par le dispositif de récupération d'énergie, dans lequel le circuit de commande comporte en outre un dispositif d'alimentation électrique (14, 16 ; 46) et un circuit de détection d'impulsion (20 ; 50, 52, 54, 56), le dispositif d'alimentation électrique et le circuit de détection d'impulsion étant connectés en parallèle entre les bornes de sortie du dispositif de récupération d'énergie et une entrée de l'émetteur,
dans lequel le dispositif d'alimentation électrique (14, 16 ; 46) est configuré pour accumuler l'énergie électrique fournie par le dispositif de récupération d'énergie et pour, avec l'énergie électrique accumulée, alimenter électriquement l'émetteur temporairement pour que l'émetteur puisse envoyer le signal de commande,
dans lequel le circuit de détection d'impulsion est configuré pour identifier le signe de la tension électrique de sortie et pour mémoriser une information représentative du signe de la tension électrique de sortie, l'émetteur étant en outre configuré pour inclure, dans le signal de commande envoyé, l'information représentative du signe de la tension électrique de sortie, et
dans lequel le circuit de détection d'impulsion (20 ; 50, 52, 54, 56) comporte une mémoire, configurée pour mémoriser un signal représentatif du signe de la tension délivrée par le dispositif de récupération d'énergie.

2. Dispositif de commande sans fil (2 ; 40) selon la revendication 1, dans lequel le signe de la tension électrique délivrée par le dispositif de récupération d'énergie est positif lorsque le mécanisme de transmission se déplace dans un premier sens et négatif lorsque le mécanisme de transmission se déplace dans un deuxième sens, le deuxième sens étant opposé au premier sens.

3. Dispositif de commande sans fil (2 ; 40) selon l'une quelconque des revendications précédentes, dans lequel le circuit de détection d'impulsion (20 ; 50, 52, 54, 56) comporte un condensateur (C), qui agit comme la mémoire du circuit d'impulsion.

4. Dispositif de commande sans fil (2 ; 40) selon l'une quelconque des revendications précédentes, dans lequel le circuit électronique de commande (18 ; 48) est configuré pour vider automatiquement la mémoire du circuit de détection d'impulsion une fois que le signe de la tension délivrée par le dispositif de récupération d'énergie a été identifié par le circuit électronique de commande.

5. Dispositif de commande sans fil (2 ; 40) selon l'une quelconque des revendications précédentes, dans lequel le circuit de détection d'impulsion (20 ; 50, 52, 54, 56) comporte un condensateur et une résistance.

6. Dispositif de commande sans fil (40) selon l'une quelconque des revendications précédentes, dans lequel le dispositif de commande (40) comporte :
- un élément mobile d'actionnement additionnel,
- un dispositif de récupération d'énergie additionnel (42, 44) couplé mécaniquement à l'élément mobile d'actionnement additionnel et configuré pour alimenter électriquement le circuit électronique de commande (48),
- au moins un circuit de détection d'impulsion additionnel connecté en sortie du dispositif de récupération d'énergie additionnel (42, 44), le circuit de détection d'impulsion additionnel étant connecté au circuit électronique de commande (48) et étant configuré pour identifier le signe de la tension électrique en sortie du circuit de détection d'impulsion additionnel et pour mémoriser une information représentative du signe de ladite tension électrique de sortie.

7. Dispositif de commande sans fil (2 ; 40) selon l'une quelconque des revendications précédentes, dans lequel l'émetteur est un émetteur radio.

8. Dispositif de commande sans fil (2 ; 40) selon l'une quelconque des revendications précédentes, dans lequel le dispositif de commande sans fil est un interrupteur de type bouton poussoir.

9. Dispositif de commande sans fil (2 ; 40) selon l'une quelconque des revendications précédentes, dans lequel le dispositif de commande sans fil est un interrupteur à bascule.

10. Dispositif de commande sans fil (2 ; 40) selon l'une quelconque des revendications précédentes, dans lequel le dispositif de commande est autonome en énergie.

## Patentansprüche

1. Drahtlose Steuervorrichtung (2; 40), umfassend:
- ein Gehäuse (4),
- ein bewegliches Betätigungselement (6), das von außerhalb des Gehäuses bedient werden kann,
- eine elektronische Steuerschaltung (18; 48) mit einem drahtlosen Sender, der in der Lage ist, ein Steuersignal an ein elektrisches Gerät zu senden,
- eine Energierückgewinnungsvorrichtung (12; 42, 44), die so konfiguriert ist, dass sie die elektronische Steuerschaltung mit Strom versorgt, wobei die Energierückgewinnungsvorrichtung mechanisch mit dem beweglichen Betätigungselement (6) mittels eines Übertragungsmechanismus verbunden und so konfiguriert ist, dass sie mechanische Energie in elektrische Energie umwandelt, wenn das bewegliche Betätigungselement betätigt wird, indem sie eine elektrische Ausgangsspannung zwischen Ausgangsanschlüssen (V+, V-) bereitstellt,
wobei die Bewegungsrichtung des Übertragungsmechanismus das Vorzeichen der von der Energierückgewinnungsvorrichtung gelieferten elektrischen Ausgangsspannung (V+, V-) bestimmt, wobei die Steuerschaltung ferner eine Stromversorgungsvorrichtung (14, 16; 46) und eine Impulserfassungsschaltung (20; 50, 52, 54, 56) umfasst, wobei die Stromversorgungsvorrichtung und die Impulserfassungsschaltung zwischen den Ausgangsanschlüssen der Energierückgewinnungsvorrichtung und einem Eingang des Senders parallel geschaltet sind,
wobei die Stromversorgungsvorrichtung (14, 16; 46) so konfiguriert ist, dass sie die von der Energierückgewinnungsvorrichtung gelieferte elektrische Energie speichert, und um mit der gespeicherten elektrischen Energie den Sender vorübergehend elektrisch zu versorgen, damit der Sender das Steuersignal senden kann,
wobei die Impulserfassungsschaltung so konfiguriert ist, dass sie das Vorzeichen der elektrischen Ausgangsspannung identifiziert und eine Information speichert, die das Vorzeichen der elektrischen Ausgangsspannung repräsentiert, wobei der Sender ferner so konfiguriert ist, dass er die das Vorzeichen der elektrischen Ausgangsspannung darstellende Information in das gesendete Steuersignal einbezieht, und
wobei die Impulserfassungsschaltung (20; 50, 52, 54, 56) einen Speicher aufweist, der so konfiguriert ist, dass er ein Signal speichert, das für das Vorzeichen der von der Energierückgewinnungsvorrichtung gelieferten Spannung repräsentativ ist.

2. Drahtlose Steuervorrichtung (2; 40) nach Anspruch 1, wobei das Vorzeichen der elektrischen Spannung, die von der Energierückgewinnungsvorrichtung geliefert wird, positiv ist, wenn der Übertragungsmechanismus sich in eine erste Richtung bewegt und negativ, wenn der Übertragungsmechanismus in eine zweite Richtung bewegt wird, wobei die zweite Richtung der ersten Richtung entgegengesetzt ist.

3. Drahtlose Steuervorrichtung (2; 40) nach einem der vorhergehenden Ansprüche, wobei die Impulserfassungsschaltung (20; 50, 52, 54, 56) einen Kondensator (C) aufweist, der als der Speicher der Impulsschaltung wirkt.

4. Drahtlose Steuervorrichtung (2; 40) nach einem der vorhergehenden Ansprüche, wobei die elektronische Steuerschaltung (18; 48) so konfiguriert ist, dass sie den Speicher der Impulserfassungsschaltung automatisch leert, sobald das Vorzeichen der von der Energierückgewinnungsvorrichtung gelieferten Spannung von der elektronischen Steuerschaltung identifiziert worden ist.

5. Drahtlose Steuervorrichtung (2; 40) nach einem der vorhergehenden Ansprüche, wobei die Impulserfassungsschaltung (20; 50, 52, 54, 56) einen Kondensator und einen Widerstand umfasst.

6. Drahtlose Steuervorrichtung (40) nach einem der vorhergehenden Ansprüche, wobei die Steuervorrichtung (40) umfasst:
- ein zusätzliches bewegliches Betätigungselement,
- eine zusätzliche Energierückgewinnungsvorrichtung (42, 44), die mechanisch mit dem zusätzlichen beweglichen Betätigungselement gekoppelt und so konfiguriert ist, dass sie die elektronische Steuerschaltung (48) elektrisch versorgt,
- mindestens eine zusätzliche Impulserfassungsschaltung, die mit dem Ausgang der zusätzlichen Energierückgewinnungsvorrichtung (42, 44) verbunden ist, wobei die zusätzliche Impulserfassungsschaltung mit der elektronischen Steuerschaltung (48) verbunden und so konfiguriert ist, dass sie das Vorzeichen der elektrischen Spannung am Ausgang der zusätzlichen Impulserfassungsschaltung identifiziert und Informationen speichert, die das Vorzeichen der genannten elektrischen Ausgangsspannung repräsentieren.

7. Drahtlose Steuervorrichtung (2; 40) nach einem der vorhergehenden Ansprüche, wobei der Sender ein Funksender ist.

8. Drahtlose Steuervorrichtung (2; 40) nach einem der vorhergehenden Ansprüche, wobei die drahtlose Steuervorrichtung ein Schalter vom Typ Druckknopf ist.

9. Drahtlose Steuervorrichtung (2; 40) nach einem der vorhergehenden Ansprüche, wobei die drahtlose Steuervorrichtung ein Wippschalter ist.

10. Drahtlose Steuervorrichtung (2; 40) nach einem der vorhergehenden Ansprüche, wobei die Steuervorrichtung energieautark ist.

## Claims

1. A wireless control device (2; 40), comprising:
- a housing (4),
- a movable actuating element (6) operable from outside the housing,
- an electronic control circuit (18; 48) comprising a wireless transmitter capable of transmitting a control signal to an electrical appliance,
- an energy recovery device (12; 42, 44) configured to supply electrical power to the electronic control circuit, the energy recovery device being mechanically coupled to the movable actuating element (6) by means of a transmission mechanism and configured to convert mechanical energy into electrical energy when the movable actuating element is actuated, by supplying an electrical output voltage between output terminals (V+, V-),
wherein the direction of movement of the transmission mechanism determines the sign of the output voltage (V+, V-) delivered by the energy recovery device, wherein the control circuit further comprises a power supply device (14, 16; 46) and a pulse detection circuit (20; 50, 52, 54, 56), the power supply device and the pulse detection circuit being connected in parallel between the output terminals of the energy recovery device and an input of the transmitter,
in which the power supply device (14, 16; 46) is configured to accumulate the electrical energy supplied by the energy recovery device and, with the accumulated electrical energy, to supply the transmitter temporarily with electrical power so that the transmitter can send the control signal,
wherein the pulse detection circuit is configured to identify the sign of the output electric voltage and to store information representative of the sign of the output electric voltage, the transmitter being further configured to include, in the control signal sent, the information representative of the sign of the output electric voltage, and
wherein the pulse detection circuit (20; 50, 52, 54, 56) comprises a memory, configured to store a signal representative of the sign of the voltage delivered by the energy recovery device.

2. A wireless control device (2; 40) according to claim 1, wherein the sign of the electrical voltage delivered by the energy recovery device is positive when the transmission mechanism moves in a first direction and negative when the transmission mechanism moves in a second direction, the second direction being opposite to the first direction.

3. A wireless control device (2; 40) according to any one of the preceding claims, wherein the pulse detection circuit (20; 50, 52, 54, 56) includes a capacitor (C), which acts as the memory of the pulse circuit.

4. A wireless control device (2; 40) according to any of the preceding claims, wherein the electronic control circuit (18; 48) is configured to clear the memory of the pulse detection circuit automatically once the sign of the voltage delivered by the energy recovery device has been identified by the electronic control circuit.

5. A wireless control device (2; 40) according to any of the preceding claims, wherein the pulse detection circuit (20; 50, 52, 54, 56) comprises a capacitor and a resistor.

6. A wireless control device (40) according to any one of the preceding claims, wherein the control device (40) comprises:
- an additional movable actuating element,
- an additional energy recovery device (42, 44) mechanically coupled to the additional mobile actuating element and configured to supply electrical power to the electronic control circuit (48),
- at least one additional pulse detection circuit connected to the output of the additional energy recovery device (42, 44), the additional pulse detection circuit being connected to the electronic control circuit (48) and being configured to identify the sign of the electrical voltage at the output of the additional pulse detection circuit and to store information representative of the sign of the said output electrical voltage.

7. A wireless control device (2; 40) according to any of the preceding claims, wherein the transmitter is a radio transmitter.

8. A wireless control device (2; 40) according to any one of the preceding claims, wherein the wireless control device is a push-button type switch.

9. A wireless control device (2; 40) according to any of the preceding claims, wherein the wireless control device is a toggle switch.

10. A wireless control device (2; 40) according to any one of the preceding claims, wherein the control device is energy autonomous.
